# FASCICULE DE BREVET EUROPEEN

(11) **EP 4 667 353 B1**
(45) Date de publication et mention de la délivrance du brevet: **05.08.2026**
(21) Numéro de dépôt: 25181828.2
(22) Date de dépôt: 10.06.2025
(51) Int. Cl.: B64C 7/02, B64D 29/06, B64D 29/08

(54) **NACELLE POUR UN MOTEUR D'AÉRONEF**
GONDEL FÜR EINEN FLUGZEUGMOTOR
NACELLE FOR AN AIRCRAFT ENGINE

(30) Priorité: 21.06.2024 FR 2406691
(43) Date de publication de la demande: 24.12.2025
(73) Titulaire: AIRBUS OPERATIONS (S.A.S.), 31060 Toulouse (FR)
(72) Inventeur: GRANGE, Quentin, TOULOUSE (FR); CHARTON, Nicolas, TOULOUSE (FR)
(74) Mandataire: Airbus-OPS SAS

(56) Documents cités:
- US-A- 4 399 966
- US-A- 4 510 714
- US-A1- 2021 079 810

## Description

### DOMAINE TECHNIQUE

La présente invention concerne une nacelle pour un système de motorisation d'aéronef qui comporte au moins un capot mobile et un ensemble moteur arrangé pour déplacer ledit au moins un capot mobile et présentant un système de bielle-manivelle, un système de motorisation d'aéronef comportant une telle nacelle et un aéronef comportant au moins un tel système de motorisation.

### ÉTAT DE LA TECHNIQUE ANTÉRIEURE

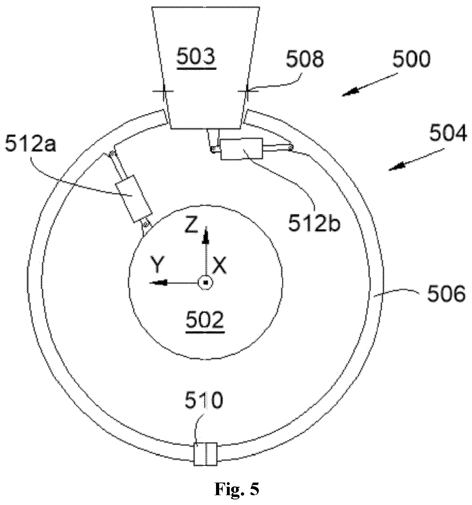

La Fig. 5 montre un système de motorisation 500 de l'état de la technique. Ce système de motorisation 500 équipe un aéronef et il comporte classiquement un noyau 502 entouré par une nacelle 504 qui forme entre autres une surface aérodynamique autour du noyau 502 et le système de motorisation est généralement fixé sous une aile de l'aéronef par un mât d'accrochage 503.

La nacelle 504 comporte des capots 506 qui sont montés articulés sur le mât d'accrochage par l'intermédiaire de charnières 508 et qui sont verrouillés en position fermée par un système de verrouillage qui verrouille les capots 506 l'un par rapport à l'autre au niveau d'un longeron inférieur 510 intégré dans chaque capot 506.

Pour des raisons de maintenance, il est nécessaire de pouvoir ouvrir les capots 506 en les faisant pivoter autour des axes des charnières 508. Pour ouvrir un capot 506, le technicien déverrouille le système de verrouillage et soulève le capot 506, la manœuvre inverse permettant de refermer le capot 506.

Un vérin 512a-b est mis en place pour aider à l'ouverture d'un capot 506.

Dans certains arrangements (à gauche sur la Fig. 5), le vérin 512a est monté entre le capot 506 et une structure du noyau 502.

Dans d'autres arrangements (à droite sur la Fig. 5), le vérin 512b est monté entre le capot 506 et une structure du mât d'accrochage 503.

L'utilisation de vérins peut limiter l'angle d'ouverture des capots et il est souhaitable de trouver un arrangement qui permet d'avoir une ouverture plus importante des capots.

En outre, avec les arrangements de l'état de la technique, les vérins 512b se trouvent potentiellement soumis à de fortes températures et le changement du noyau peut être gêné par la présence des vérins 512a.

Il est donc souhaitable de trouver un arrangement qui procure des améliorations.

Le document US4399966A décrit un dispositif autonome comprenant une pompe entraînée par un moteur destinée à pomper du fluide hydraulique depuis un réservoir monté sur le moteur, via un circuit de commande. Le circuit de commande achemine de manière sélective le fluide vers des actionneurs associés à chacune des parties du capot afin de déplacer ces dernières vers leurs positions souhaitées. Le circuit de commande hydraulique comprend de préférence des vannes actionnées par solénoïde associées à chacun des actionneurs et pouvant être actionnées pour permettre de manière sélective l'entrée et la sortie de fluide dans et hors des actionneurs, selon les besoins, afin d'ouvrir et de fermer les parties du capot.

### EXPOSÉ DE L'INVENTION

Un objet de la présente invention est de proposer une nacelle d'un système de motorisation d'aéronef qui comporte au moins un capot mobile et un ensemble moteur arrangé pour déplacer ledit au moins un capot mobile et présentant un système de bielle-manivelle.

À cet effet, est proposée une nacelle pour un système de motorisation d'un aéronef, ladite nacelle présentant un axe longitudinal et comportant :
- au moins un capot monté articulé entre une position fermée et une position ouverte autour d'un axe de charnière,
- un ensemble moteur présentant pour chacun desdits au moins un capot, un arbre d'actionnement mobile en rotation autour d'un axe de rotation globalement parallèle à l'axe longitudinal, et
- pour chaque arbre d'actionnement, un système de bielle-manivelle, où l'une des extrémités de la manivelle est solidaire dudit arbre d'actionnement et où l'une des extrémités de la bielle est montée articulée sur le capot associé.

Avec un tel arrangement, l'angle d'ouverture du capot est amélioré. En effet, l'utilisation de vérins selon l'art antérieur étant limitée par le ratio de longueur des vérins entre les positions ouverte et fermée, le montage d'un vérin selon l'art antérieur entre un capot et une structure du mât d'accrochage, en prenant en compte l'environnement et l'encombrement d'un tel vérin, ne permettrait pas d'atteindre facilement l'angle d'ouverture du capot souhaité selon l'invention. De plus, lorsque cet arrangement est mutualisé entre les capots bâbord et tribord, cet arrangement permet un gain d'espace, un gain de poids et un gain de coût pour l'aéronef. En outre, cet arrangement permet un gain de temps pour les opérations de maintenance du système de motorisation de l'aéronef.

Avantageusement, ledit ensemble moteur est disposé en partie haute de la nacelle. Avec un tel arrangement, l'ouverture ou la fermeture des capots de la nacelle est dépourvue de lien avec le système de motorisation, ce qui permet de simplifier le démontage du noyau avec les capots installés autour dudit noyau. En effet, il n'est plus nécessaire de déconnecter un vérin et de le remplacer par un outillage configuré pour maintenir les capots en position ouverte.

Avantageusement, ledit ensemble moteur comporte un moteur avec un arbre moteur parallèle à l'axe de rotation et pour chaque arbre d'actionnement, un système d'engrenage présentant un pignon d'entrée solidaire de l'arbre moteur et un pignon de sortie solidaire de l'arbre d'actionnement, où le rapport d'engrenage du système d'engrenage est supérieur à 1.

Avantageusement, le moteur est un moteur électrique.

Avantageusement, le moteur est un moteur hydraulique.

Avantageusement, pour chaque arbre d'actionnement, l'ensemble moteur comporte un système d'embrayage arrangé entre l'arbre d'actionnement et la manivelle et pouvant prendre alternativement une position d'embrayage dans laquelle le système d'embrayage solidarise l'arbre d'actionnement et la manivelle et une position de débrayage dans laquelle le système d'embrayage désolidarise l'arbre d'actionnement et la manivelle.

Avantageusement, pour chaque arbre d'actionnement, l'ensemble moteur comporte un capteur de position arrangé pour détecter la position angulaire dudit arbre d'actionnement. Avantageusement, pour chaque arbre d'actionnement, l'ensemble moteur comporte des butées limitant le déplacement en rotation de la manivelle.

Avantageusement, l'ensemble moteur présente pour chacun desdits au moins un capot, un arbre d'actionnement mobile en rotation autour d'un axe de rotation globalement parallèle à l'axe longitudinal, et deux systèmes de bielle-manivelle, où l'une des extrémités de chaque manivelle est solidaire de l'arbre d'actionnement et où l'une des extrémités de chaque bielle est montée articulée sur le capot associé.

L'invention propose également un système de motorisation pour un aéronef comportant un noyau et une nacelle selon l'une des variantes précédentes entourant le noyau.

L'invention propose également un aéronef comportant au moins un système de motorisation selon la variante précédente.

Avantageusement, l'aéronef comporte au moins une aile et un mât d'accrochage, le système de motorisation étant fixé à ladite aile par l'intermédiaire dudit mât d'accrochage, et le moteur et le système d'engrenage sont agencés dans une boîte de protection, ladite boîte de protection étant fixée sous ledit mât d'accrochage.

Avantageusement, l'aéronef comporte au moins une aile et un mât d'accrochage, le système de motorisation étant fixé à ladite aile par l'intermédiaire dudit mât d'accrochage, et le moteur est agencé dans ledit mât d'accrochage.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 est une vue de côté d'un aéronef comportant une nacelle selon l'invention,
- la Fig. 2 est une représentation schématique en vue de face d'une nacelle selon l'invention,
- la Fig. 3 est une vue en perspective d'un ensemble moteur mis en œuvre dans la nacelle selon l'invention en position fermée pour chaque capot,
- la Fig. 4 est une vue en perspective de l'ensemble moteur de la Fig. 3 en position fermée pour l'un des capots et en position partiellement ouverte pour l'autre capot,
- la Fig. 5 est une représentation schématique en vue de face d'une nacelle de l'état de la technique,
- la Fig. 6a est une représentation schématique en vue de face d'une nacelle selon un autre mode de réalisation de l'invention,
- la Fig. 6b est une représentation schématique en vue de face d'une nacelle selon un autre mode de réalisation de l'invention,
- la Fig. 6c est une représentation schématique en vue de face d'une nacelle selon un autre mode de réalisation de l'invention,
- la Fig. 7a est une représentation schématique en vue de face d'une partie d'une nacelle selon un autre mode de réalisation de l'invention, en position fermée pour chaque capot,
- la Fig. 7b est une représentation schématique en vue de face d'une partie d'une nacelle selon la Fig. 7a, en position ouverte pour chaque capot,
- la Fig. 8a est une représentation schématique en vue de face d'une partie d'une nacelle selon un autre mode de réalisation de l'invention, en position fermée pour le capot,
- la Fig. 8b est une représentation schématique en vue de face d'une partie d'une nacelle selon la Fig. 8a, en position ouverte pour le capot, et
- la Fig. 9 est une vue en perspective d'un ensemble moteur d'une nacelle selon un autre mode de réalisation de l'invention.

### EXPOSÉ DÉTAILLÉ DE MODES DE RÉALISATION

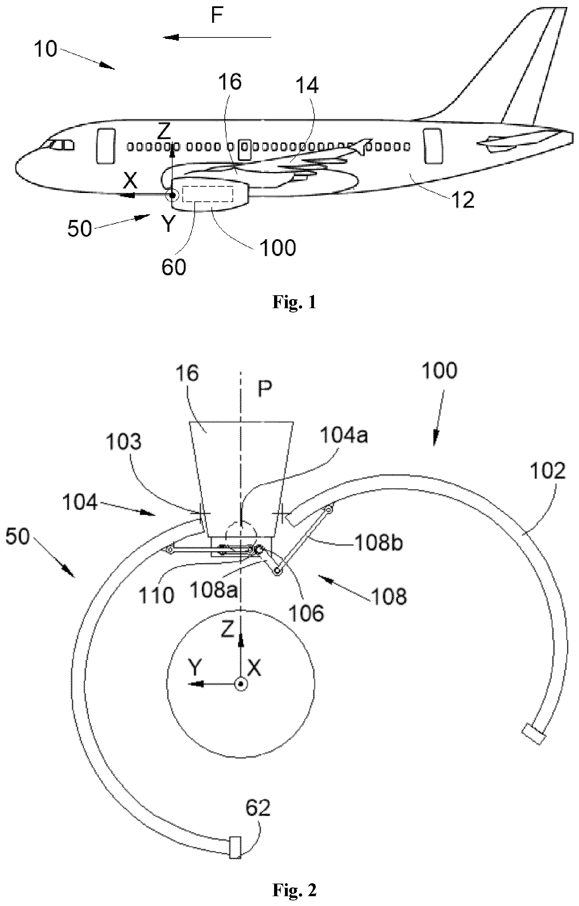

Dans la description qui suit, les termes relatifs à une position sont pris en référence à un aéronef en position d'avancement comme il est représenté sur la Fig. 1, et où la flèche F montre la direction d'avancement de l'aéronef en vol.

La Fig. 1 montre un aéronef 10 comportant un fuselage 12 de part et d'autre duquel est fixée une aile 14. Chaque aile 14 supporte au moins un système de motorisation 50 par l'intermédiaire d'un mât d'accrochage 16 fixé entre une structure de l'aile 14 et une structure du mât d'accrochage 16.

Le système de motorisation 50 comporte un noyau 60 (en traits pointillés sur la Fig. 1) entouré par une nacelle 100 selon l'invention.

Dans la description qui suit, et par convention, on appelle X l'axe longitudinal de la nacelle 100 qui est parallèle à l'axe longitudinal de l'aéronef 10 ou axe de roulis, orienté positivement dans le sens d'avancement de l'aéronef 10, on appelle Y l'axe transversal qui est parallèle à l'axe de tangage de l'aéronef 10 qui est horizontal lorsque l'aéronef 10 est au sol, et Z l'axe vertical qui est parallèle à l'axe de lacet lorsque l'aéronef 10 est au sol, ces trois directions X, Y et Z étant orthogonales entre elles.

La nacelle 100 présente un plan médian vertical P de symétrie qui est confondu avec le plan vertical XZ et, dans le mode de réalisation de l'invention présenté à la Fig. 2, la nacelle 100 comporte de part et d'autre du plan médian vertical P, un capot 102.

Chaque capot 102 prend la forme d'un demi-cylindre de manière à former ensemble un cylindre entourant le noyau 60.

Le noyau 60 prend par exemple la forme d'un turboréacteur double flux avec à l'avant une soufflante. Le capot 102 peut alors constituer le capot de la soufflante ou le capot pour le système d'inverseur de poussée.

Chaque capot 102 est monté articulé sur une structure qui peut être une structure du système de motorisation 50 ou du mât d'accrochage 16. L'articulation de chaque capot 102 s'effectue autour d'un axe de charnière avant 103 et il est mobile entre une position fermée dans laquelle le capot 102 est resserré autour du noyau 60 et une position ouverte dans laquelle le capot 102 est écarté du noyau 60. Sur la Fig. 2, le capot 102 à bâbord est en position ouverte et le capot 102 à tribord est en position fermée.

En position fermée, les deux capots 102 viennent s'accoster l'un contre l'autre, au niveau d'un longeron inférieur 62 de chaque capot 102. Chaque capot 102 vient ainsi au contact du longeron inférieur 62 de l'autre capot 102, au niveau de son propre longeron inférieur 62, qui est, en position fermée, agencé au niveau de la partie basse de la nacelle 100, à 6 heures.

Les axes de charnières 103 sont disposés en partie haute de chaque capot 102 et les capots 102 sont montés articulés sur le mât d'accrochage 16 autour de l'axe de charnière 103 associé.

Pour verrouiller chaque capot 102 en position fermée, la nacelle 100 comporte des systèmes de verrouillage accessibles depuis l'extérieur de la nacelle 100 par un technicien. Chaque système de verrouillage peut prendre toutes les formes connues par l'homme du métier et il prend alternativement une position verrouillée dans laquelle il verrouille le capot 102 associé en position fermée, ou une position déverrouillée dans laquelle il ne verrouille pas le capot 102 associé qui est alors libre de se déplacer de la position fermée à la position ouverte et inversement. Pour des raisons de redondance, chaque capot 102 est muni d'au moins deux systèmes de verrouillage distincts.

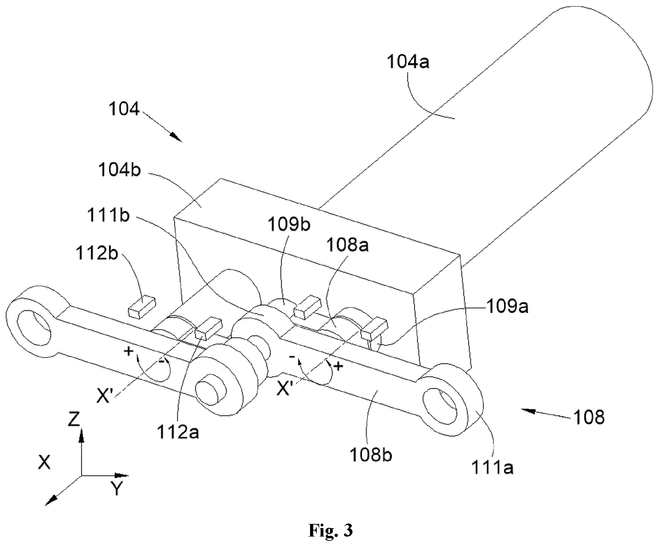

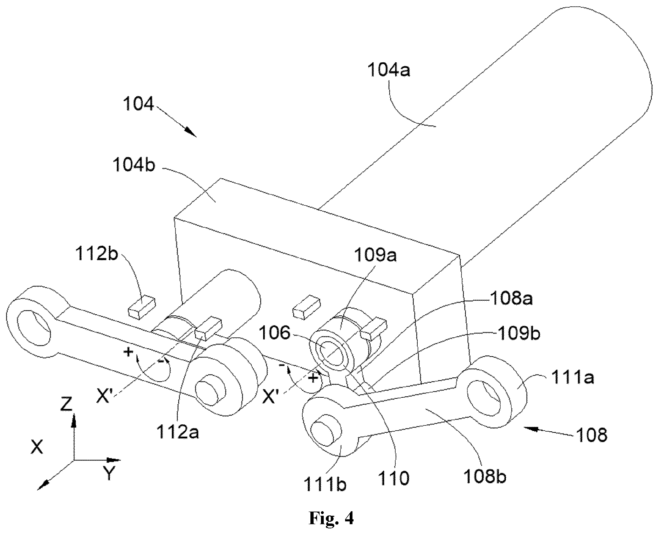

Dans le mode de réalisation de l'invention présenté à la Fig. 2, il y a un ensemble moteur 104 commun aux deux capots 102. De la même manière, les Figs. 3 et 4 montrent un ensemble moteur 104 permettant d'actionner les deux capots 102 qui sont disposés de part et d'autre du plan médian P. Un ensemble moteur 104 est disposé à distance des axes de charnières 103 du capot 102.

Bien sûr, il est également possible de prévoir qu'il y a un ensemble moteur 104 par capot 102. La Fig. 3 montre l'ensemble moteur 104 en position fermée des deux capots 102 et la Fig. 4 montre l'ensemble moteur 104 en position fermée pour le capot 102 à tribord et en position ouverte pour le capot 102 à bâbord.

D'une manière générale, la nacelle 100 comporte au moins un capot 102 et un ensemble moteur 104 présentant pour chacun desdits au moins un capot 102, un arbre d'actionnement 106 mobile en rotation autour d'un axe de rotation X' globalement parallèle à l'axe longitudinal X, c'est-à-dire aux tolérances de construction près.

Ainsi, selon le cas, il y un seul arbre d'actionnement 106 lorsqu'il y a un seul capot 102 actionné par l'ensemble moteur 104 ou deux arbres d'actionnement 106 lorsqu'il y a deux capots 102 actionnés par l'ensemble moteur 104, ce qui est le cas ici.

Chaque ensemble moteur 104 est arrangé pour faire tourner chaque arbre d'actionnement 106 alternativement dans un sens d'ouverture pour faire passer le capot 102 associé de la position fermée à la position ouverte et dans un sens de fermeture pour faire passer le capot 102 associé de la position ouverte à la position fermée. Le sens d'ouverture est inverse par rapport au sens de fermeture.

Dans le mode de réalisation de l'invention présenté à la Fig. 3, pour le capot bâbord, le sens d'ouverture est représenté par la flèche '+' et le sens de fermeture est représenté par la flèche '-'. Pour les deux arbres d'actionnement 106, les sens sont inversés.

Pour actionner l'ensemble moteur, une unité de contrôle est prévue pour commander la rotation dans un sens ou dans l'autre et l'arrêt en rotation en fonction des besoins. L'unité de contrôle prend par exemple la forme d'un processeur qui peut être complété d'une mémoire vive RAM (« Random Access Memory » en anglais), d'une mémoire morte ROM (« Read Only Memory » en anglais) ou une mémoire Flash, d'une unité de stockage ou un lecteur de support de stockage (« STCK »), tel qu'un lecteur de cartes SD (« Secure Digital » en anglais) ou un disque dur HDD (« Hard Disk Drive » en anglais), et d'une interface de communication pour communiquer avec l'ensemble moteur 104.

Pour chaque arbre d'actionnement 106, c'est-à-dire pour chaque capot 102 associé à l'ensemble moteur 104, la nacelle 100 comporte un système de bielle-manivelle 108, avec une manivelle 108a qui est montée sur l'arbre d'actionnement 106 et tourne avec lui autour de l'axe de rotation X' et une bielle 108b.

La manivelle 108a présente une extrémité proximale 109a et une extrémité distale 109b. L'extrémité proximale 109a de la manivelle 108a est solidaire de l'arbre d'actionnement 106. La bielle 108b présente une extrémité proximale 111a et une extrémité distale 111b. L'extrémité distale de la bielle 108b est montée articulée sur le capot 102 associé à l'arbre d'actionnement 106 considéré, par exemple par une liaison du type rotule.

L'extrémité distale 109b de la manivelle 108a et l'extrémité proximale 111a de la bielle 108b sont montées articulées l'une à l'autre, en particulier par une liaison pivot autour d'un axe globalement parallèle à l'axe longitudinal X.

La rotation de la manivelle 108a va ainsi entraîner un déplacement en translation de la bielle 108b et donc une rotation du capot 102 associé dans un sens ou dans l'autre.

Avec un tel arrangement, il suffit donc de commander l'ensemble moteur 104 pour faire tourner le/les arbres d'actionnement 106 pour ouvrir ou fermer chaque capot 102 associé avec un système simple et présentant un angle d'ouverture important.

En outre, le ou chaque ensemble moteur 104 est disposé en partie supérieure de la nacelle 100, c'est-à-dire à 12.00 heures et au voisinage du mât d'accrochage 16, c'est-à-dire à distance d'un éventuel rayonnement thermique provenant du noyau 60. L'ensemble moteur est fixé directement sur le mât d'accrochage 16, ou sur une structure elle-même fixée au mât d'accrochage 16.

L'ensemble moteur 104 comporte ici un ensemble 104a comprenant un moteur électrique avec un arbre moteur parallèle à l'axe de rotation X' et une première boîte de vitesse, ainsi qu'une deuxième boîte de vitesse 104b. La première boîte de vitesse est compacte et à haut niveau d'engrènement, et comporte par exemple un système d'engrenage comprenant des trains planétaires disposés en série. La deuxième boîte de vitesse 104b comporte pour chaque arbre d'actionnement 106 associé à l'ensemble moteur 104, un système d'engrenage présentant un pignon d'entrée solidaire de la première boîte de vitesse et un pignon de sortie solidaire de l'arbre d'actionnement 106. La deuxième boîte de vitesse peut comporter un système d'embrayage ou de débrayage disposé autour des arbres d'actionnement 106. Le moteur électrique de l'ensemble 104a est alimenté électriquement par une source électrique et commandé en rotation par l'unité de contrôle.

Pour faciliter le déplacement du capot 102, le rapport d'engrenage du système d'engrenage de la première boîte de vitesse est supérieur à 1. La mise en place d'un système d'engrenage où le rapport d'engrenage est plus important, permet de réduire le couple nécessaire à l'ouverture et à la fermeture du capot 102.

Quand il y a deux arbres d'actionnement 106 pour un seul moteur électrique, le système d'engrenage (de la deuxième boîte de vitesse 104b) associé à chaque arbre d'actionnement 106 (via la deuxième boîte de vitesse 104b) doit être tel que la rotation de l'arbre moteur dans un sens correspond au sens d'ouverture pour chaque arbre d'actionnement 106 et chaque capot 102 et tel que la rotation de l'arbre moteur dans un sens inverse correspond au sens de fermeture pour chaque arbre d'actionnement 106 et chaque capot 102.

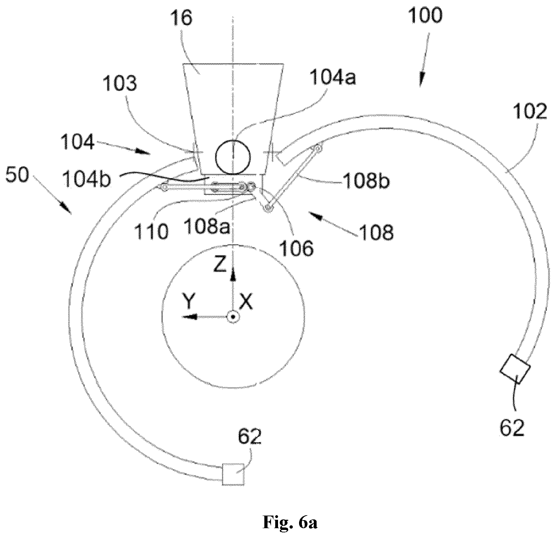

Le moteur électrique est ainsi disposé parallèlement à l'axe longitudinal X pour un gain de place et, comme représenté sur la Fig. 6a, le moteur électrique peut être disposé dans le mât d'accrochage 16 pour une meilleure protection, en particulier contre la chaleur.

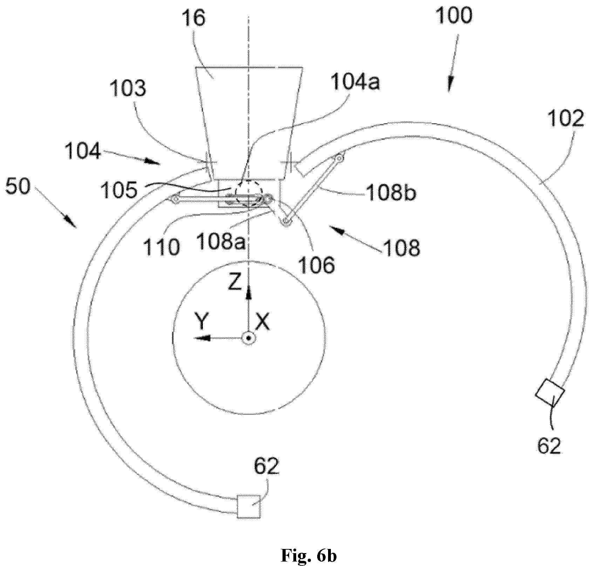

Comme représenté sur la Fig. 6b, le moteur électrique peut être disposé juste en dessous du mât d'accrochage 16 et dans ce dernier cas, il peut alors être enfermé dans une boîte de protection 105 avec le système d'engrenage pour être mieux protégé du rayonnement thermique provenant du noyau 60. La boîte de protection est ici fixée sous le mât d'accrochage 16.

La boîte de protection 105 peut être un boîtier étanche à l'air, pour éviter qu'un rayonnement thermique provenant du noyau 60 ne vienne réchauffer le moteur électrique ou le système d'engrenage. La boîte de protection 105, englobant l'ensemble moteur 104, peut être réalisée en matériau ignifugé ou en un matériau résistant à des hautes températures, par exemple en titane, et comprendre également un matelas de protection thermique agencé autour de l'ensemble moteur 104. La boîte de protection 105 permet avantageusement de prolonger la durée de vie de l'ensemble moteur, de réduire le risque d'apparition de potentielles pannes au sein dudit ensemble moteur et de réduire les coûts de fabrication dudit ensemble moteur, ainsi que le poids dudit ensemble moteur, puisqu'il est alors possible d'utiliser des matériaux nécessitant une tenue à la température plus faible que sans boîte de protection 105.

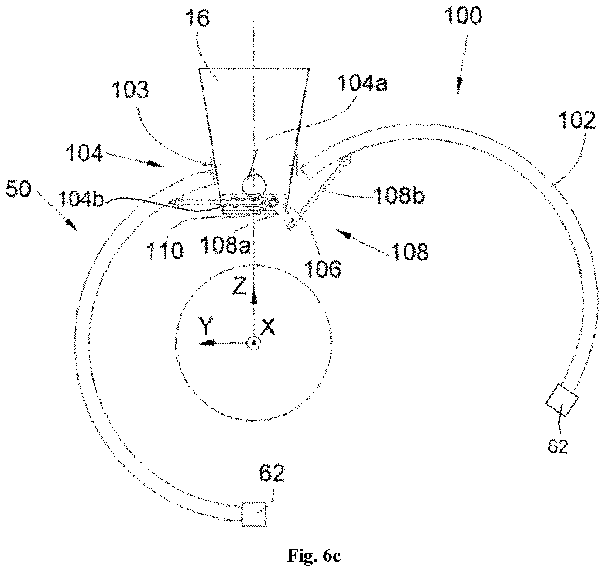

Comme représenté sur la Fig. 6c, l'ensemble moteur 104, c'est-à-dire le moteur électrique et le système d'engrenage, peut être disposé dans le mât d'accrochage 16, ce dernier étant par exemple allongé vers le bas.

Selon la position du moteur électrique de l'ensemble 104a par rapport à la première boîte de vitesse de l'ensemble 104a, un système de déport mécanique, comme un arbre flexible, peut être mis en place entre l'arbre moteur et le pignon d'entrée qui est alors solidaire de l'arbre moteur à travers ce système de déport mécanique.

Dans le mode de réalisation de l'invention décrit ci-dessus, il a été supposé que les deux capots 102 sont déplacés simultanément, mais il peut être nécessaire de manipuler uniquement l'un des deux. Pour ce faire, pour chaque arbre d'actionnement 106, l'ensemble moteur 104 comporte un système d'embrayage 110 qui est arrangé entre l'arbre d'actionnement 106 et la manivelle 108a. Ce système d'embrayage 110 est commandé par l'unité de contrôle et permet de solidariser ou désolidariser l'arbre d'actionnement 106 et la manivelle 108a. Le système d'embrayage 110 peut être à commutation électrique. Ce système d'embrayage 110 peut ainsi prendre alternativement une position d'embrayage dans laquelle le système d'embrayage 110 solidarise l'arbre d'actionnement 106 et la manivelle 108a et une position de débrayage dans laquelle le système d'embrayage 110 désolidarise l'arbre d'actionnement 106 et la manivelle 108a.

Ce système d'embrayage 110 peut également prendre alternativement quatre positions distinctes : une première position où uniquement un premier capot 102 est sélectionné (par exemple le capot bâbord), une deuxième position neutre où aucun capot 102 n'est sélectionné, une troisième position où les deux capots 102 sont sélectionnés et une dernière position où uniquement le deuxième capot 102 est sélectionné (par exemple le capot tribord). Ceci permet avantageusement de réduire le nombre d'ensemble moteur 104 pour actionner chaque capot 102, et donc le poids d'un tel système d'actionnement.

Selon une configuration, le système d'embrayage 110 peut être retiré, et l'ensemble moteur 104 est alors configuré pour ouvrir et fermer les capots 102 bâbord et tribord simultanément.

Dans le mode de réalisation de l'invention présenté ici, le système d'embrayage 110 est monté autour de l'arbre d'actionnement 106 mais il pourrait prendre une autre forme. Par exemple, l'extrémité proximale 111a de la bielle 108b peut comporter un orifice traversant de forme oblongue, configuré pour que, lorsque la fonction de débrayage est activée, la bielle 108b n'entraîne pas le capot 102, mais l'axe traversant l'orifice de forme oblongue de l'extrémité 111a glisse dans ledit orifice oblong et lorsque la fonction d'embrayage est activée, l'orifice oblong se referme pour entraîner le capot 102. Selon un autre exemple, le capot 102 peut présenter un orifice traversant de forme oblongue, dans lequel un axe connecté à la bielle 108b est configuré pour glisser afin de réaliser la fonction de débrayage.

Pour connaître la position de chaque capot 102, et ainsi pouvoir arrêter l'ensemble moteur 104 lorsque cela est nécessaire, pour chaque arbre d'actionnement 106, l'ensemble moteur 104 comporte un capteur de position qui est arrangé pour détecter la position angulaire dudit arbre d'actionnement 106 et donc dudit capot 102 associé.

Pour des raisons de sécurité et éviter que le capot 102 aille en-deçà de la position fermée ou au-delà de la position ouverte, pour chaque arbre d'actionnement 106, l'ensemble moteur 104 comporte des butées 112a-b limitant le déplacement en rotation de la manivelle 108a. Il y a ainsi une butée 112a qui arrête la manivelle 108a lorsqu'elle a atteint la position correspondant à la position fermée du capot 102, et une butée 112b qui arrête la manivelle 108a lorsqu'elle a atteint la position correspondant à la position ouverte du capot 102. Les butées 112a, 112b sont représentées sur les Figs. 3 et 4 comme non reliées à des éléments présents sur les figures, pour des soucis de clarté des dessins uniquement.

L'ensemble moteur 104 peut également comporter des moyens de freinage (non représentés) permettant de maintenir le capot 102 en position ouverte, ou d'empêcher la fermeture du capot 102, notamment en cas de perte de la source électrique du moteur électrique. Ces moyens de freinage peuvent ainsi avoir une fonction de maintien des capots 102 dans leur position d'ouverture, et/ou de sécurisation des capots en cas de panne/défaillance système. L'invention a été décrite ci-dessus pour des capots 102 entourant le noyau 60 du système de motorisation 50. L'invention peut également être appliquée à d'autres types de capots, et notamment à des capots de maintenance.

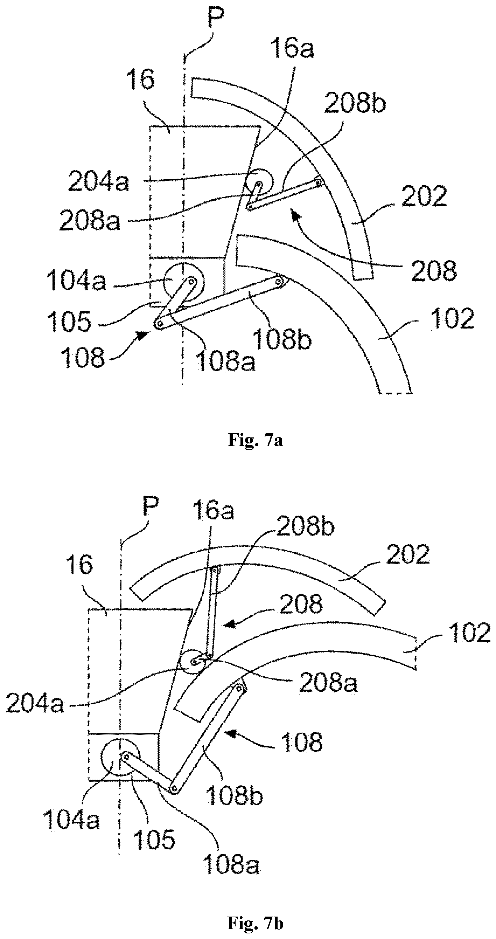

Les Figs. 7a et 7b représentent une partie d'une nacelle 100 comprenant, de part et d'autre du plan médian vertical P de symétrie, un capot 102 tel que décrit précédemment, ainsi qu'un capot de maintenance 202. Le capot de maintenance 202 est disposé autour du mât d'accrochage 16, et permet de donner, en position ouverte, un accès au mât d'accrochage 16 pour la maintenance des systèmes intégrés dans ce dernier. Sur la Fig. 7a, le capot 102 et le capot de maintenance 202 sont en position fermée, et sur la Fig. 7b le capot 102 et le capot de maintenance 202 sont en position ouverte. Pour chaque capot de maintenance 202, un ensemble moteur permet d'actionner l'ouverture ou la fermeture du capot de maintenance 202, et comporte, entre autres, un moteur électrique 204a, une boîte de vitesse et un système de bielle manivelle 208, 208a, 208b. Le moteur électrique 204a est ici fixé sur le mât d'accrochage 16, et notamment sur une paroi latérale 16a dudit mât d'accrochage 16. Bien entendu, d'autres positionnements du moteur électrique 204a sont possibles, et notamment ledit moteur électrique 204a peut être agencé dans le mât d'accrochage 16, pour un gain de place. Pour l'ensemble moteur du capot de maintenance 202, il est possible de se passer d'une boîte de protection, puisque l'ensemble moteur du capot de maintenance est soumis à de plus faibles flux de chaleur que ceux pouvant provenir du noyau 60.

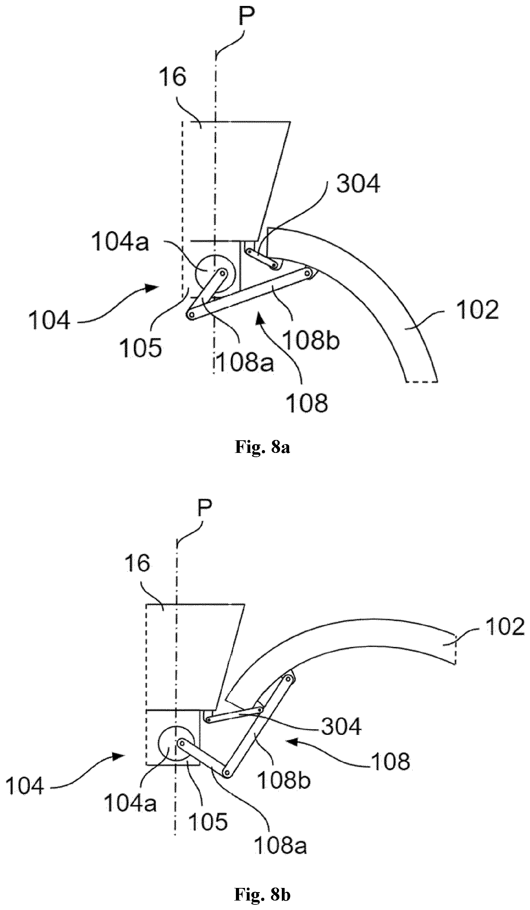

Pour des raisons de redondance, la nacelle 100 peut également être équipée, en plus de l'ensemble moteur 104, pour chaque capot 102, d'un système de maintien 304 fixé entre le mât d'accrochage 16 et le capot 102, et plus précisément fixé sous le mât d'accrochage 16. Le système de maintien 304 représenté sur les Figs. 8a et 8b prend la forme d'une tige de maintien, également appelée tige de retenue ou bras de soutien. Ce système de maintien 304 est actionnable entre deux états, un premier état de fermeture du capot 102, et un deuxième état d'ouverture du capot 102. Les Figs. 8a et 8b représentent une nacelle 100 munie d'un système de maintien 304, ainsi que d'un ensemble moteur 104, le capot 102 étant en position fermée sur la Fig. 8a et en position ouverte sur la Fig. 8b. Ce système de maintien 304 est auto-bloquant, ce qui signifie qu'il se verrouille automatiquement dans son deuxième état, afin de sécuriser la position ouverte du capot 102. Ce système de maintien 304 est muni d'un moyen de déverrouillage de son deuxième état, qui est déporté du mât d'accrochage 16, et donc accessible par un opérateur. Le moyen de déverrouillage du système de maintien 304 peut prendre la forme d'une poignée de verrouillage (non représentée sur les figures) par le biais d'un lien mécanique avec le verrou sur le système de maintien 304.

En fonctionnement, l'ensemble moteur 104 permet l'ouverture du capot 102, ce qui entraîne le déploiement du système de maintien 304. Le système de maintien 304 se verrouille automatiquement en position d'ouverture du capot 102, ce qui permet de décharger l'ensemble moteur 104. Un opérateur peut ainsi effectuer les opérations de maintenance nécessaires, le système de maintien 304 permettant de maintenir le capot 102 dans sa position d'ouverture. Pour des raisons de redondance, pour chaque capot 102, le système de bielle-manivelle peut être doublé et ainsi l'ensemble moteur 104 présente pour chaque capot 102, un arbre d'actionnement 106 mobile en rotation autour d'un axe de rotation X' globalement parallèle à l'axe longitudinal X, et deux systèmes de bielle-manivelle 108, 308, où l'une des extrémités de chaque manivelle 108a est solidaire de l'arbre d'actionnement 106 et où l'une des extrémités de chaque bielle 108b, 308b est montée articulée sur le capot 102 associé.

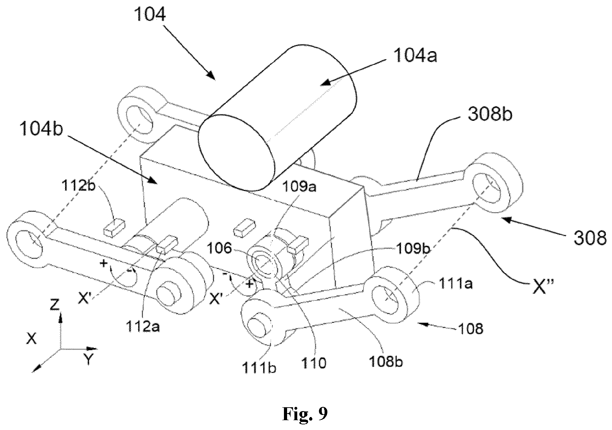

Plus précisément, comme illustré sur la Fig. 9, il y a un ensemble moteur 104, qui comporte un ensemble 104a composé d'un moteur électrique avec un arbre moteur et d'une première boîte de vitesse avec un premier engrenage d'entrée solidaire de l'arbre moteur, et un premier engrenage de sortie. L'ensemble moteur 104 comporte également une deuxième boîte de vitesse 104b avec un deuxième engrenage d'entrée solidaire du premier engrenage de sortie de la première boîte de vitesse, et un deuxième engrenage de sortie solidaire d'un engrenage central, qui est solidaire de et traversé par un arbre d'actionnement 106. Pour chaque capot 102, il y a un seul arbre d'actionnement 106, qui traverse la deuxième boîte de vitesse 104b, et un seul système d'engrenage par arbre d'actionnement 106. La deuxième boîte de vitesse 104b est agencée en dessous de l'ensemble 104a, mais cet agencement n'est pas limitatif, et dépend de l'espace disponible. L'arbre d'actionnement 106 dépasse de part et d'autre de la deuxième boîte de vitesse 104b, selon l'axe longitudinal X, de sorte à permettre un actionnement de l'ouverture ou de la fermeture du capot 102 en deux points distants (selon l'axe longitudinal X) du capot 102. L'ensemble moteur 104 comporte ainsi un seul moteur électrique, une seule première boîte de vitesse et une seule deuxième boîte de vitesse 104b configurés pour entraîner l'actionnement, pour chaque capot 102, de deux systèmes de bielle-manivelle 108, 308 simultanément. L'ensemble moteur 104, qui est commun pour deux capots 102, comporte un système d'embrayage / de débrayage dans la deuxième boîte de vitesse 104b pour chaque système d'engrenage de l'arbre d'actionnement 106, c'est-à-dire pour chacun des deux systèmes d'engrenage des deux arbres d'actionnement 106. Autrement dit, le moteur électrique et les première et deuxième boîtes de vitesse entraînent deux arbres d'actionnement 106 qui peuvent être découplés l'un de l'autre et débrayés indépendamment l'un de l'autre, afin de découpler l'ouverture et la fermeture des capots 102. Chaque arbre d'actionnement 106 est relié à deux systèmes de bielles-manivelles 108, 308, ce qui permet d'avoir uniquement quatre bielles-manivelles pour la nacelle 100.

Les extrémités de chaque bielle 108b, 308b est montée articulée sur le même capot 102 associé, à distance l'une de l'autre selon l'axe longitudinal X. Par exemple, l'extrémité de la bielle 108b est fixée au capot 102, sur une zone avant du capot 102, tandis que l'extrémité de la bielle 308b est fixée au capot 102, sur une zone arrière du capot 102. Chaque capot 102 est ainsi monté articulé par rapport au mât d'accrochage 16 en deux points distincts, c'est-à-dire que les efforts liés à l'articulation du capot 102 sont repris par deux chemins d'efforts distincts. Selon cette configuration, il y a au moins deux systèmes de bielle-manivelle par capot, soit quatre systèmes de bielle-manivelle par nacelle.

Avantageusement, cet agencement ne nécessite pas de système de maintien (tel que le système de maintien 304). Avantageusement, cet agencement est entièrement automatique, et ne nécessite pas de déverrouillage manuel, notamment des moyens de verrouillage d'un système de maintien. En outre, les deux chemins de charge (les deux systèmes de bielle-manivelle) sont synchronisés automatiquement pour l'ouverture ou la fermeture des capots.

Selon une configuration, le moteur électrique de l'ensemble 104a est alimenté par de l'énergie électrique provenant du réseau électrique de l'aéronef (lui-même branché sur un réseau électrique local au sol), ou par une batterie par exemple, qui peut être déportée du mât d'accrochage 16, ladite batterie pouvant être soit dans l'aéronef, soit au sol.

En alternative au moteur électrique tel que décrit précédemment, l'ensemble moteur 104 peut comporter un moteur hydraulique alimenté par de l'énergie hydraulique provenant d'un système de refroidissement de l'aéronef, tel qu'un système de climatisation, ou par une source d'énergie hydraulique externe, qui peut être déportée du mât d'accrochage 16.

## Revendications

1. Nacelle (100) pour un système de motorisation (50) d'un aéronef (10), ladite nacelle (100) présentant un axe longitudinal (X) et comportant :
- au moins un capot (102) monté articulé entre une position fermée et une position ouverte autour d'un axe de charnière (103),
- un ensemble moteur (104) présentant pour chacun desdits au moins un capot (102), un arbre d'actionnement (106) mobile en rotation autour d'un axe de rotation (X') globalement parallèle à l'axe longitudinal (X), et
- pour chaque arbre d'actionnement (106), un système de bielle-manivelle (108), où l'une des extrémités de la manivelle (108a) est solidaire dudit arbre d'actionnement (106) et où l'une des extrémités de la bielle (108b) est montée articulée sur le capot (102) associé.

2. Nacelle (100) selon la revendication 1, dans laquelle ledit ensemble moteur (104) est disposé en partie haute de la nacelle (100).

3. Nacelle (100) selon l'une des revendications 1 ou 2, dans laquelle ledit ensemble moteur (104) comporte un moteur avec un arbre moteur parallèle à l'axe de rotation (X') et pour chaque arbre d'actionnement (106), un système d'engrenage présentant un pignon d'entrée solidaire de l'arbre moteur et un pignon de sortie solidaire de l'arbre d'actionnement (106), où le rapport d'engrenage du système d'engrenage est supérieur à 1.

4. Nacelle (100) selon la revendication 3, dans laquelle ledit moteur est un moteur électrique.

5. Nacelle (100) selon la revendication 3, dans laquelle ledit moteur est un moteur hydraulique.

6. Nacelle (100) selon l'une des revendications 1 à 5, dans laquelle pour chaque arbre d'actionnement (106), l'ensemble moteur (104) comporte un système d'embrayage (110) arrangé entre l'arbre d'actionnement (106) et la manivelle (108a) et pouvant prendre alternativement une position d'embrayage dans laquelle le système d'embrayage (110) solidarise l'arbre d'actionnement (106) et la manivelle (108a) et une position de débrayage dans laquelle le système d'embrayage (110) désolidarise l'arbre d'actionnement (106) et la manivelle (108a).

7. Nacelle (100) selon l'une des revendications 1 à 6, dans laquelle pour chaque arbre d'actionnement (106), l'ensemble moteur (104) comporte un capteur de position arrangé pour détecter la position angulaire dudit arbre d'actionnement (106).

8. Nacelle (100) selon l'une des revendications 1 à 7, dans laquelle pour chaque arbre d'actionnement (106), l'ensemble moteur (104) comporte des butées (112a-b) limitant le déplacement en rotation de la manivelle (108a).

9. Nacelle (100) selon l'une des revendications 1 à 8, dans laquelle l'ensemble moteur (104) présente pour chacun desdits au moins un capot (102), un arbre d'actionnement (106) mobile en rotation autour d'un axe de rotation (X') globalement parallèle à l'axe longitudinal (X), et deux systèmes de bielle-manivelle (108, 308), où l'une des extrémités de chaque manivelle (108a) est solidaire de l'arbre d'actionnement (106) et où l'une des extrémités de chaque bielle (108b, 308b) est montée articulée sur le capot (102) associé.

10. Système de motorisation (50) pour un aéronef (10) comportant un noyau (60) et une nacelle (100) selon l'une des revendications 1 à 9 entourant le noyau (60).

11. Aéronef (10) comportant au moins un système de motorisation (50) selon la revendication 10.

12. Aéronef (10) selon la revendication 11, lorsque la revendication 10 dépend au moins de la revendication 3, comportant au moins une aile (14) et un mât d'accrochage (16), le système de motorisation (50) étant fixé à ladite aile (14) par l'intermédiaire dudit mât d'accrochage (16), dans lequel le moteur et le système d'engrenage sont agencés dans une boîte de protection, ladite boîte de protection étant fixée sous ledit mât d'accrochage (16).

13. Aéronef (10) selon la revendication 11, lorsque la revendication 10 dépend au moins de la revendication 3, comportant au moins une aile (14) et un mât d'accrochage (16), le système de motorisation (50) étant fixé à ladite aile (14) par l'intermédiaire dudit mât d'accrochage (16), dans lequel le moteur est agencé dans ledit mât d'accrochage (16).

## Patentansprüche

1. Gondel (100) für ein Motorisierungssystem (50) eines Luftfahrzeugs (10), wobei die Gondel (100) eine Längsachse (X) aufweist und Folgendes umfasst:
- mindestens eine Abdeckung (102), die zwischen einer geschlossenen Stellung und einer geöffneten Stellung um eine Scharnierachse (103) gelenkig gelagert ist,
- eine Motoranordnung (104), die für jede der mindestens einen Abdeckung (102) eine Betätigungswelle (106) aufweist, die um eine zu der Längsachse (X) im Wesentlichen parallel verlaufende Drehachse (X') drehbeweglich ist, und
- für jede Betätigungswelle (106) einen Kurbeltrieb (108), wobei eines der Enden der Kurbel (108a) mit der Betätigungswelle (106) verbunden ist und wobei eines der Enden des Pleuels (108b) an der zugeordneten Abdeckung (102) gelenkig gelagert ist.

2. Gondel (100) nach Anspruch 1, wobei die Motoranordnung (104) im oberen Teil der Gondel (100) angeordnet ist.

3. Gondel (100) nach einem der Ansprüche 1 oder 2, wobei die Motoranordnung (104) einen Motor mit einer parallel zur Drehachse (X') verlaufenden Motorwelle umfasst und für jede Betätigungswelle (106) ein Getriebesystem, das ein mit der Motorwelle verbundenes Eingangszahnrad und ein mit der Betätigungswelle (106) verbundenes Ausgangszahnrad umfasst, wobei das Übersetzungsverhältnis des Getriebesystems größer als 1 ist.

4. Gondel (100) nach Anspruch 3, wobei der Motor ein Elektromotor ist.

5. Gondel (100) nach Anspruch 3, wobei der Motor ein Hydraulikmotor ist.

6. Gondel (100) nach einem der Ansprüche 1 bis 5, wobei die Motoranordnung (104) für jede Betätigungswelle (106) ein Kupplungssystem (110) umfasst, das zwischen der Betätigungswelle (106) und der Kurbel (108a) eingerichtet ist und alternativ eine Einrückstellung, in der das Kupplungssystem (110) die Betätigungswelle (106) und die Kurbel (108a) verbindet, und eine Ausrückstellung, in der das Kupplungssystem (110) die Betätigungswelle (106) und die Kurbel (108a) trennt, einnehmen kann.

7. Gondel (100) nach einem der Ansprüche 1 bis 6, wobei die Motoranordnung (104) für jede Betätigungswelle (106) einen Positionssensor umfasst, der dazu eingerichtet ist, die Winkelposition der Betätigungswelle (106) zu detektieren.

8. Gondel (100) nach einem der Ansprüche 1 bis 7, wobei die Motoranordnung (104) für jede Betätigungswelle (106) Anschläge (112a-b) umfasst, die die Drehbewegung der Kurbel (108a) begrenzen.

9. Gondel (100) nach einem der Ansprüche 1 bis 8, wobei die Motoranordnung (104) für jede der mindestens einen Abdeckung (102) eine Betätigungswelle (106), die um eine im Wesentlichen parallel zur Längsachse (X) verlaufende Drehachse (X') drehbeweglich ist, und zwei Kurbeltriebe (108, 308) aufweist, wobei eines der Enden jeder Kurbel (108a) mit der Betätigungswelle (106) verbunden ist und wobei eines der Enden jedes Pleuels (108b, 308b) an der zugeordneten Abdeckung (102) gelenkig gelagert ist.

10. Motorisierungssystem (50) für ein Luftfahrzeug (10), umfassend einen Kern (60) und eine Gondel (100) nach einem der Ansprüche 1 bis 9, die den Kern (60) umgibt.

11. Luftfahrzeug (10), umfassend mindestens ein Motorisierungssystem (50) nach Anspruch 10.

12. Luftfahrzeug (10) nach Anspruch 11, wenn Anspruch 10 mindestens von Anspruch 3 abhängig ist, umfassend mindestens eine Tragfläche (14) und einen Aufhängungspylon (16), wobei das Motorisierungssystem (50) über den Aufhängungspylon (16) an der Tragfläche (14) befestigt ist, wobei der Motor und das Getriebesystem in einem Schutzgehäuse angeordnet sind, wobei das Schutzgehäuse unter dem Aufhängungspylon (16) befestigt ist.

13. Luftfahrzeug (10) nach Anspruch 11, wenn Anspruch 10 mindestens von Anspruch 3 abhängig ist, umfassend mindestens eine Tragfläche (14) und einen Aufhängungspylon (16), wobei das Motorisierungssystem (50) über den Aufhängungspylon (16) an der Tragfläche (14) befestigt ist, wobei der Motor in dem Aufhängungspylon (16) angeordnet ist.

## Claims

1. Nacelle (100) for a propulsion system (50) of an aircraft (10), said nacelle (100) having a longitudinal axis (X) and including:
- at least one cowl (102) pivotally mounted between a closed position and an open position about a hinge axis (103),
- a motor assembly (104) having, for each of said at least one cowl (102), an actuating shaft (106) moveable in rotation about a rotation axis (X') substantially parallel to the longitudinal axis (X), and
- for each actuating shaft (106), a crank-and-connecting rod system (108), in which one of the ends of the crank (108a) is secured to said actuating shaft (106) and in which one of the ends of the connecting rod (108b) is pivotally mounted on the associated cowl (102).

2. Nacelle (100) according to Claim 1, wherein said motor assembly (104) is arranged at the top of the nacelle (100).

3. Nacelle (100) according to either of Claims 1 and 2, wherein said motor assembly (104) includes a motor with a drive shaft parallel to the rotation axis (X') and, for each actuating shaft (106), a gear system having an input pinion secured to the drive shaft and an output pinion secured to the actuating shaft (106), in which the gear ratio of the gear system is greater than 1.

4. Nacelle (100) according to Claim 3, wherein said motor is an electric motor.

5. Nacelle (100) according to Claim 3, wherein said motor is a hydraulic motor.

6. Nacelle (100) according to one of Claims 1 to 5, wherein, for each actuating shaft (106), the motor assembly (104) includes a clutch system (110) which is arranged between the actuating shaft (106) and the crank (108a) and can alternately assume an engaged position in which the clutch system (110) couples the actuating shaft (106) and the crank (108a) and a disengaged position in which the clutch system (110) decouples the actuating shaft (106) and the crank (108a).

7. Nacelle (100) according to one of Claims 1 to 6, wherein, for each actuating shaft (106), the motor assembly (104) includes a position sensor arranged to detect the angular position of said actuating shaft (106).

8. Nacelle (100) according to one of Claims 1 to 7, wherein, for each actuating shaft (106), the motor assembly (104) includes stops (112a-b) limiting the rotational movement of the crank (108a).

9. Nacelle (100) according to one of Claims 1 to 8, wherein the motor assembly (104) has, for each of said at least one cowl (102), an actuating shaft (106) which is moveable in rotation about a rotation axis (X') substantially parallel to the longitudinal axis (X), and two crank-and-connecting rod systems (108, 308), in which one of the ends of each crank (108a) is secured to the actuating shaft (106) and in which one of the ends of each connecting rod (108b, 308b) is pivotally mounted on the associated cowl (102).

10. Propulsion system (50) for an aircraft (10) including a core (60) and a nacelle (100) according to one of Claims 1 to 9 surrounding the core (60).

11. Aircraft (10) including at least one propulsion system (50) according to Claim 10.

12. Aircraft (10) according to Claim 11, when Claim 10 is dependent on at least Claim 3, including at least one wing (14) and a mounting pylon (16), the propulsion system (50) being fastened to said wing (14) by means of said mounting pylon (16), wherein the motor and the gear system are arranged in a protective housing, said protective housing being fastened under said mounting pylon (16).

13. Aircraft (10) according to Claim 11, when Claim 10 is dependent on at least Claim 3, including at least one wing (14) and a mounting pylon (16), the propulsion system (50) being fastened to said wing (14) by means of said mounting pylon (16), wherein the motor is arranged in said mounting pylon (16).
